(19) Europäisches Patentamt
European Patent Office
Office européen des brevets

(11) EP 4 624 634 A1

(12) **EUROPEAN PATENT APPLICATION**
published in accordance with Art. 153(4) EPC

(43) Date of publication:
**01.10.2025 Bulletin 2025/40**

(21) Application number: **23894948.1**

(22) Date of filing: **20.11.2023**

(51) International Patent Classification (IPC):
***C25D 1/04*** (2006.01) ***C25D 3/38*** (2006.01)
***C25D 17/12*** (2006.01) ***C23C 28/00*** (2006.01)
***C23F 11/18*** (2006.01) ***H01M 4/66*** (2006.01)
***H01M 4/13*** (2010.01)

(52) Cooperative Patent Classification (CPC):
**C23C 28/00; C23F 11/18; C25D 1/04; C25D 3/38; C25D 17/12; H01M 4/13; H01M 4/66**

(86) International application number:
**PCT/KR2023/018610**

(87) International publication number:
**WO 2024/112020 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.11.2022 KR 20220159359**
**28.12.2022 KR 20220187296**
**05.10.2023 KR 20230132905**
**05.10.2023 KR 20230132913**

(71) Applicant: **SK Nexilis Co., Ltd.**
**Jeollabuk-do 56137 (KR)**

(72) Inventors:
- **JIN, Shan Hua**
**Jeongeup-si, Jeollabuk-do 56137 (KR)**
- **YOON, Min Seok**
**Jeongeup-si, Jeollabuk-do 56137 (KR)**

(74) Representative: **Ter Meer Steinmeister & Partner Patentanwälte mbB**
**Nymphenburger Straße 4**
**80335 München (DE)**

# (54) COPPER FOIL, ELECTRODE INCLUDING SAME, SECONDARY BATTERY INCLUDING SAME, AND MANUFACTURING METHOD THEREFOR

(57) An embodiment of the present invention provides a copper foil that comprises: a copper layer containing more than 99.9 weight% copper, and a protective layer on the copper layer, and has a tensile strength index of 3.0 kgf/mm$^2$ or less and an elongation index of 2.1% or less. The tensile strength index is calculated according to the following equation 1, [Equation 1] Tensile Strength Index = |Tensile Strength 2 - Tensile Strength 1|. In equation 1, tensile strength 1 is a tensile strength of a sample before the salt spray test, tensile strength 2 is a tensile strength of the sample after the salt spray test. The elongation index is calculated according to the following equation 2,

$$[\text{Equation 2}]\ \text{Elongation index} = |\text{Elongation 2} - \text{Elongation 1}|.$$

In equation 2, elongation 1 is an elongation rate of a sample before the salt spray test and elongation 2 is an elongation rate of the sample after the salt spray test. The salt spray test is conducted over 72 hours in 6 cycles with 5±1% NaCl, wherein 1 cycle consists of spraying for 2 hours at 35±2 °C followed by drying for 10 hours.

An embodiment of the present invention provides a copper foil comprising 99.9 weight% or more of copper, with a first weight retention rate of 0.1% or less and a second weight retention rate of 0.3% or less. The first weight retention rate is calculated according to the following equation 3, [Equation 3] First Weight Retention Rate=|(Weight after 5 hr immersion-Weight before immersion)/Weight before immersion X 100|, and the second weight retention rate is calculated according to the following equation 4. [Equation 4] Second Weight Retention Rate=|(Weight after 24 hr immersion-Weight before immersion)/Weight before immersion X 100|.

FIG. 1

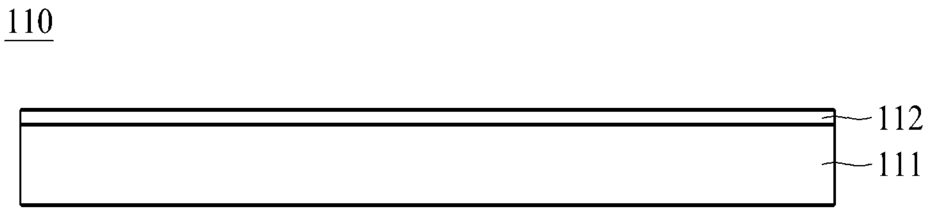

## Description

### [Technical field]

The present disclosure relates to a copper foil, an electrode including the same, a secondary battery including the same, and a method for manufacturing the same.

### [Background Art]

Secondary batteries are types of energy conversion devices that convert electrical energy into chemical energy, store the chemical energy therein, and then convert the chemical energy back to the electrical energy when electricity is needed, thereby generating electricity. The secondary batteries are used as energy sources for electric vehicles as well as portable home appliances such as mobile phones, laptop computers, and the like. The secondary batteries are rechargeable and thus are also referred to as rechargeable batteries.

As secondary batteries that have economic and environmental advantages over disposable primary batteries, there are lead-acid batteries, nickel-cadmium secondary batteries, nickel-hydrogen secondary batteries, and lithium secondary batteries.

In particular, lithium secondary batteries may store a relatively large amount of energy relative to a size and weight thereof as compared with other secondary batteries. Accordingly, in the field of information communication devices in which portability and mobility are important, the lithium secondary batteries are preferred, and an application range thereof is also expanding to energy storage devices for hybrid vehicles and electric vehicles.

Lithium secondary batteries are repeatedly used in each cycle including charging and discharging. When a certain device is operated with a fully charged lithium secondary battery, the lithium secondary battery should have a high charge/discharge capacity in order to increase an operating time of the device. Accordingly, research to satisfy ever-increasing expectations (needs) of consumers for charge/discharge capacity of a lithium secondary battery is continuously required.

Such a secondary battery includes an anode current collector made of a copper foil, and among copper foils, an electrolytic copper foil is widely used as an anode current collector of a secondary battery. Along with an increase in demand for secondary batteries, there is an increase in demand for secondary batteries with high capacity, high efficiency, and high quality, and thus, there is a need for electrolytic copper foils capable of improving characteristics of secondary batteries. In particular, there is a need for electrolytic copper foils that can ensure high capacity to secondary batteries and enable secondary batteries to stably maintain capacity and performance.

Meanwhile, as copper foils become smaller in thickness, the amount of active materials that can be included in the same space may be increased, and the number of current collectors may be increased, and thus, the capacity of secondary batteries can be increased. However, as the copper foils become smaller in thickness, curling occurs, and thus, when the copper foil is wound, defects such as tears or wrinkles of the copper foil occur due to curling of an edge, and accordingly, there is difficulty in manufacturing copper foils in the form of a very thin film. Accordingly, in order to manufacture a copper foil having a very thin thickness, the curling of the copper foil should be prevented.

Meanwhile, when a copper foil is used as an anode current collector for a secondary battery, the surface of the copper foil may be easily dissolved by an external environment. Accordingly, research is continuously being conducted to ensure that a surface state of the copper foil is not easily changed by an external environment.

### [Disclosure]

### [Technical Problem]

Accordingly, the present disclosure relates to a copper foil capable of preventing the problems caused by the limitations and disadvantages of the related art described above, an electrode including the same, a secondary battery including the same, and a method for manufacturing the same.

According to one embodiment of the present disclosure, there is provided a copper foil that is not curled, wrinkled, or torn even after a salt spray test by having a tensile strength index of 3.0 $kgf/mm^2$ or less.

According to one embodiment of the present disclosure, there is provided a copper foil that is not curled, wrinkled, or torn even after a salt spray test by having an elongation index of 2.1% or less.

According to one embodiment of the present disclosure, there is provided a copper foil having a first weight retention rate of 0.1% or less so that a surface state thereof is maintained and wrinkles or tears thereof are prevented, even after immersion.

According to another embodiment of the present disclosure, there is provided a copper foil having a second weight retention rate of 0.3% or less so that a surface state thereof is maintained and wrinkles or tears thereof are

prevented, even after immersion.

According to still another embodiment of the present disclosure, there is provided a copper foil having a first roughness variation of 0.7 μm or less so that a surface state thereof is maintained and wrinkles or tears thereof are prevented, even after immersion.

According to yet another embodiment of the present disclosure, there is provided a copper foil having a second roughness variation of 0.8 μm or less so that a surface state thereof is maintained and wrinkles or tears thereof are prevented, even after immersion.

According to another embodiment of the present disclosure, there is provided an electrode for a secondary battery including the copper foil, and a secondary battery including the electrode for a secondary battery.

According to still another embodiment of the present disclosure, there is provided a method for manufacturing a copper foil in which the occurrence of curls, wrinkles, or tears is prevented.

In addition to the aspects of the present disclosure described above, other features and advantages of the present disclosure will be described in the following detailed description, as will be clearly understood by those skilled in the art to which the present disclosure pertains.

**[Technical Solution]**

According one embodiment of the present disclosure, there is provided a copper foil including a copper film including 99.9 wt% or more of copper, and a protective layer formed on the copper film, wherein the copper foil has a tensile strength index of 3.0 $kgf/mm^2$ or less, and an elongation index of 2.1% or less. The tensile strength index is calculated by Equation 1 below, [Equation 1]tensile strength index = |tensile strength 2 - tensile strength 1| wherein, tensile strength 1 in Equation 1 is a tensile strength of a sample before a salt spray test, and tensile strength 2 in Equation 1 is a tensile strength of the sample after the salt spray test. The elongation index is calculated by Equation 2 below, [Equation 2] elongation index = |elongation 2 - elongation 1| wherein elongation 1 in Equation 2 is an elongation of the sample before the salt spray test, elongation 2 in Equation 2 is an elongation of the sample after the salt spray test. The salt spray test is performed for a total of 72 hours by spraying a 5±1% NaCl solution on the copper foil for 6 cycles, wherein 1 cycle means that the solution is sprayed at a temperature of 35±2 °C for 2 hours and then is dried for 10 hours.

According to one embodiment of the present disclosure, there is provided a copper foil including a copper film including 99.9 wt% or more of copper, wherein the copper foil has a first weight retention rate of 0.1% or less, and a second weight retention rate of 0.3% or less. The first weight retention rate is calculated by Equation 3 below, [Equation 3] first weight retention rate=|(weight after 5 hr immersion-weight before immersion)/weight before immersion*100|. The second weight retention rate is calculated by Equation 4 below, [Equation 4] second weight retention rate=|(weight after 24 hr immersion-weight before immersion)/weight before immersion*100|.

According to another embodiment of the present disclosure, there is provided a method for manufacturing a copper foil, the method including preparing an electrolyte containing copper ions, forming a copper film, and forming a protective layer on the copper film, wherein the forming of the copper film includes forming the copper film on a rotating anode drum by electrically conducting a cathode plate and the rotating anode drum, which are disposed to be spaced apart from each other in the electrolyte in an electrolytic bath, and the electrolyte includes copper ions at a concentration of 70 g/L to 100 g/L, sulfuric acid at a concentration of 70 g/L to 150 g/L, chlorine (Cl) at a concentration of 15 ppm to 25 ppm, lead ions ($Pb^{2+}$) at a concentration of 1 ppm to 100 ppm, arsenic (As) at a concentration of 0.5 ppm to 5 ppm, silver ions ($Ag^+$) at a concentration of 0.1 ppm to 3 ppm, hydrogen peroxide at a concentration of 1 ml/L to 10 ml/L, and an organic additive, wherein the organic additive includes at least one of a polishing agent (component A), a moderator (component B), and a roughness regulator (component C), wherein the polishing agent (component A) includes sulfonic acid or a metal salt thereof, the moderator (component B) includes a non-ionic water-soluble polymer, and the roughness regulator (component C) includes a nitrogen-containing heterocyclic quaternary ammonium salt or a derivative thereof.

According to still another embodiment of the present disclosure, there is provided an electrode for a secondary battery, the electrode including a copper foil and an active material layer disposed on at least one surface of the copper foil.

According to yet another embodiment of the present disclosure, there is provided a secondary battery including a cathode configured to provide lithium ions during charging, and anode configured to provide electrons and lithium ions during discharge, an electrolyte disposed between the cathode and the anode to provide an environment in which the lithium ions are movable, and a separator configured to electrically insulate the anode and the cathode.

**[Advantageous Effects]**

According to the present disclosure, the occurrence of wrinkles or tears can be prevented in a manufacturing process of a copper foil, the occurrence of wrinkles or tears can be prevented and controlled even after a salt spray test, and intermediate parts, such as flexible printed circuit boards (FPCBs) and secondary batteries, and final products can be manufactured using the copper foil, so that productivity of the intermediate parts as well as the final products can be

improved.

According to the present disclosure, the occurrence of wrinkles or tears can be prevented in a manufacturing process of a copper foil, and even after immersion, a surface state of the copper foil can be maintained and the occurrence of wrinkles or tears can be prevented and controlled. In addition, intermediate parts, such as flexible printed circuit boards (FPCBs) and secondary batteries, and final products can be manufactured using the copper foil, so that productivity of the intermediate parts as well as the final products can be improved.

**[Description of Drawings]**

FIG. 1 is a cross-sectional view of a copper foil according to one embodiment of the present disclosure;
FIG. 2 is a cross-sectional view of a copper foil according to another embodiment of the present disclosure;
FIG. 3 is a photograph of a copper foil after a salt spray test according to still another embodiment of the present disclosure;
FIG. 4 is a cross-sectional view of an electrode for a secondary battery according to yet another embodiment of the present disclosure;
FIG. 5 is a cross-sectional view of an electrode for a secondary battery according to yet another embodiment of the present disclosure;
FIG. 6 is a schematic cross-sectional view of a secondary battery according to yet another embodiment of the present disclosure; and
FIG. 7 is a device for manufacturing a copper foil according to yet another embodiment of the present disclosure.

**[Best Model**

Hereinafter, embodiments of the present disclosure will be described in detail with reference to the accompanying drawings. However, the embodiments described below are presented only for illustrative purposes to help a clear understanding of the present disclosure, and the scope of the present disclosure is not limited.

Shapes, sizes, ratios, angles, numbers, and the like disclosed in the drawings for describing the embodiments of the present disclosure are illustrative, and thus the present disclosure is not limited to the matters illustrated in the drawings. Throughout the present specification, the same components may be referred to by the same reference numerals. In describing the present disclosure, detailed descriptions of well-known technologies will be omitted when it is determined that they may unnecessarily obscure the gist of the present disclosure.

When terms "including," "having," "consisting of," and the like described in the present specification are used, other parts may be added unless a term "only" is used herein. When a component is expressed as the singular form, the plural form is included unless otherwise specified. In addition, in analyzing a component, it is interpreted as including an error range even when there is no explicit description.

In describing a positional relationship, for example, when a positional relationship of two parts is described as being "on," "above," "below, "next to," or the like, unless "immediately" or "directly" is not used, one or more other parts may be located between the two parts.

Spatially relative terms, such as "below," "beneath," "lower," "above," "upper" and the like, may be used herein for ease of description to describe one element or component's relationship to another element(s) or component(s) as illustrated in the drawings. It will be understood that the spatially relative terms are intended to include different orientations of the element in use or operation in addition to the orientation illustrated in the drawings. For example, when an element in the drawings is turned over, an element described as being "above" or "upper" relative to another element will then be "below" or "lower" relative to the other element. Thus, the exemplary term "below" may include both above and below orientations. Likewise, the exemplary terms "above" or "upper" may include both above and below orientations.

In describing a temporal relationship, for example, when a temporal predecessor relationship is described as being "after," "subsequent," "next to," "prior to," or the like, unless "immediately" or "directly" is not used, cases that are not continuous may also be included.

In order to describe various components, terms such as "first," "second," and the like are used, but these components are not limited by these terms. These terms are only used to distinguish one component from another component. Therefore, a first component described below may be a second component within the technical spirit of the present disclosure.

The term "at least one" should be understood to include all possible combinations from one or more related items. For example, the meaning of "at least one of first, second, and third items" may mean all combinations of two or more items of the first, second and third items as well as each of the first, second and third item.

The features of various embodiments of the present disclosure may be partially or wholly coupled to or combined

with each other, and may be various technically linked or operated, and each of the embodiments may be implemented independently of each other or may be implemented together in a related relationship.

FIG. 1 is a cross-sectional view of a copper foil 110 according to one embodiment of the present disclosure.

Referring to FIG. 1, the copper foil 110 of the present disclosure includes a copper film 111 including 99.9 wt% or more of copper and a protective layer 112 formed on the copper film 111. In the copper foil 110 illustrated in FIG. 1, the protective layer 112 is formed on one surface of the copper film 111, but the embodiments of the present disclosure are not limited thereto. Referring to FIG. 2, the protective layer 112 may be formed on each of both surfaces of the copper film 111.

The copper film 111 may be formed on a rotating anode drum through electroplating, and may have a shiny surface that is in direct contact with the rotating anode drum in an electroplating process and a matte side opposite to the shiny surface.

The protective layer 112 is formed by electrodepositing an anticorrosion material on the copper film 111. The anticorrosion material may include at least one of a chromium compound, a silane compound, and a nitrogen compound. The protective layer 112 prevents oxidation and corrosion of the copper film 111 and improves heat resistance thereof, thereby increasing a lifespan of a final product including the copper foil 110 as well as a lifespan of the copper foil 110 itself.

According to one embodiment of the present disclosure, the copper foil 110 has a tensile strength index of 3.0 $kgf/mm^2$ or less. The tensile strength index may be obtained through a calculation according to Equation 1 below using tensile strength 1 and tensile strength 2. When the tensile strength index is 3.0 $kgf/mm^2$ or less, the occurrence of wrinkles or tears during the manufacturing process of the copper foil may be prevented, and the occurrence of wrinkles or tears even after a salt spray test may be prevented or controlled.

[Equation 1]

$$\text{Tensile strength index} = |\text{tensile strength 2} - \text{tensile strength 1}|$$

Tensile strength 1 in Equation 1 refers to a tensile strength of a sample before a salt spray test, and tensile strength 2 in Equation 1 refers to a tensile strength of the sample after the salt spray test.

In this case, the salt spray test is performed for a total of 72 hours by spraying a $5\pm1\%$ NaCl solution for 6 cycles on each copper foil, wherein 1 cycle means spraying at a temperature of $35\pm2$ °C for 2 hours and followed by drying the sprayed sample for 10 hours.

On the other hand, in a case in which the tensile strength index of the copper foil 110 exceeds 3.0 $kgf/mm^2$, when performing a salt spray test on the copper foil 110, the change in tensile strength of the copper foil 110 before and after the salt spray test is increased, and thus wrinkles or tears may occur in the copper foil 110 after the salt spray test, thereby reducing workability and increasing a defect rate of the secondary battery.

According to one embodiment of the present disclosure, the copper foil 110 has an elongation index of 2.1% or less. The elongation index may be obtained through a calculation according to Equation 2 below using elongation 1 and elongation 2. When the elongation index is 2.1% or less, the occurrence of wrinkles or tears during the manufacturing process of the copper foil may be prevented, and the occurrence of wrinkles or tears even after a salt spray test may be prevented or controlled.

[Equation 2]

$$\text{Elongation index} = |\text{elongation 2} - \text{elongation 1}|$$

Elongation 1 in Equation 2 refers to an elongation of a sample before a salt spray test, and elongation 2 in Equation 2 refers to an elongation of the sample after the salt spray test.

In this case, the salt spray test is performed for total of 72 hours by spraying a $5\pm1\%$ NaCl solution on each copper foil for 6 cycles, wherein 1 cycle means spraying the solution at a temperature of $35\pm2$ °C for 2 hours and followed by drying the sprayed solution for 10 hours.

On the other hand, in a case in which the elongation index of the copper foil 110 exceeds 2.1%, when performing a salt spray test on the copper foil 110, the change in elongation of the copper foil 110 before and after the salt spray test is increased, and thus wrinkles or tears may occur in the copper foil 110 after the salt spray test, thereby reducing workability and increasing a defect rate of the secondary battery.

The copper foil 110 according to one embodiment of the present disclosure has a thickness of 4 μm to 35 μm. When the copper foil 110 is used as a current collector of an electrode in a secondary battery, as the thickness of the copper foil 110 becomes smaller, more current collectors can be accommodated in the same space, which is advantageous for high capacity of the secondary battery. However, the manufacture of the copper foil 110 having a thickness of less than 4 μm causes a degradation in workability.

On the other hand, when the secondary battery is manufactured with the copper foil 110 with a thickness exceeding 35 μm, it becomes difficult to achieve high capacity due to the thick copper foil 110.

The copper foil 110 according to one embodiment of the present disclosure may have tensile strength 2 of 25 $kg/mm^2$ or more. Tensile strength 2 according to one embodiment of the present disclosure is a tensile strength of the sample after the salt spray test. In order to suppress wrinkling and tearing of the copper foil 110 after the salt spray test, the copper foil 110 of the present disclosure has high tensile strength 2 of 28 $kg/mm^2$ or more. When the tensile strength of the copper foil 110 after the salt spray test is less than 28 $kg/mm^2$, during a roll-to-roll manufacturing process, folding of the copper foil 110 is caused between two adjacent rolls, or wrinkling of lateral end portions of the copper foil 110 is caused.

The copper foil 110 according to one embodiment of the present disclosure may have elongation 2 of 3.0% to 12%. Elongation 2 according to one embodiment of the present disclosure is an elongation of the sample after the salt spray test. In order to suppress wrinkling and tearing of the copper foil 110 after the salt spray test, the copper foil 110 of the present disclosure has high elongation 2 of 3.0% to 12%.

In a case in which the elongation of the copper foil 110 after the salt spray test is less than 3%, when the copper foil 110 is used as a current collector of a secondary battery, there is a high risk that the copper foil 110 will be torn because it cannot be stretched sufficiently in response to a large expansion in volume of a high-capacity active material.

On the other hand, when the elongation of the copper foil 110 after the salt spray test exceeds 12%, the copper foil 110 is easily stretched in a process of manufacturing an electrode for a secondary battery, thereby causing deformation in the electrode.

According to one embodiment of the present disclosure, the copper foil 110 has a first weight retention rate of 0.1% or less. The first weight retention rate may be obtained through a calculation according to Equation 3 below.

First weight retention rate = |(weight after 5 hr immersion - weight before immersion)/weight before immersion * 100| [Equation 3]

The weight after 5 hr immersion in Equation 3 refers to a weight of a sample measured after immersing the sample in a 20% NaOH solution for 5 hours.

The weight before immersion in Equation 3 refers to a weight of the sample measured before immersing the sample in the 20% NaOH solution.

When the first weight retention rate of the copper foil 110 exceeds 0.1%, after the immersion for 5 hours, changes in both weight and surface state of the copper foil 110 may be increased. As a result, the copper foil 110 may not have excellent coatability on an active material, and adhesive strength between the copper foil 110 and an active material layer may be reduced. In addition, when the change in surface state of the copper foil 110 is increased, wrinkles or tears may occur.

Accordingly, in order to prevent the occurrence of wrinkles or tears in the manufacturing process of the copper foil while maintaining the surface state even after immersion so that the occurrence of wrinkles or tears is prevented, it is necessary for the first weight retention rate of the copper foil 110 to be 0.1% or less.

According to one embodiment of the present disclosure, the copper foil 110 has a second weight retention rate of 0.3% or less. The second weight retention rate may be obtained through a calculation according to Equation 4 below.

Second weight retention rate = |(weight after 24 hr immersion - weight before immersion)/weight before immersion * 100| [Equation 4]

The weight after 24 hr immersion in Equation 4 refers to a weight of a sample measured after immersing the sample in a 20% NaOH solution for 24 hours.

The weight before immersion in Equation 4 refers to a weight of the sample measured before immersing the sample in the 20% NaOH solution.

When the second weight retention rate of the copper foil 110 exceeds 0.3%, after the immersion for 24 hours, changes in both weight and surface state of the copper foil 110 may be increased. As a result, the copper foil 110 may not have excellent coatability on an active material, and the adhesive strength between the copper foil 110 and the active material layer may be reduced. In addition, when the change in surface state of the copper foil 110 is increased, wrinkles or tears may occur.

Accordingly, in order to prevent the occurrence of wrinkles or tears in the manufacturing process of the copper foil while maintaining the surface state even after immersion so that the occurrence of wrinkles or tears is prevented, it is necessary for the second weight retention rate of the copper foil 110 to be 0.3% or less.

According to one embodiment of the present disclosure, the copper foil 110 has a first roughness variation of 0.7 μm or less. The copper foil 110 may have a matte surface (M surface) and a shiny surface (S surface). According to one embodiment of the present disclosure, the copper film 111 may be formed on a rotating anode drum 40 through

electroplating, and has a surface (the shiny surface) coming into contact with the rotating anode drum 40 and a surface (the matte surface) opposite to the shiny surface.

The first roughness variation may be obtained through a calculation according to Equation 5 below.

First roughness variation = |surface roughness (Rz) of matte surface after 24 hr immersion-surface roughness (Rz) of matte surface before immersion| [Equation 5]

The surface roughness (Rz) of the matte surface after 24 hr immersion in Equation 5 refers to a ten-point average roughness (Rz) of the matte surface (M surface) of the copper foil 110 after immersing the copper foil 110 in a 20% NaOH solution for 24 hours.

The surface roughness (Rz) of the matte surface before the immersion in Equation 5 refers to a ten-point average roughness (Rz) of the matte surface (M surface) of the copper foil 110 before the immersion.

When the first roughness variation of the copper foil 110 exceeds 0.7 μm, the change in surface state of the copper foil 110 may be increased after the immersion for 24 hours. As a result, the copper foil 110 may not have excellent coatability on an active material, and adhesive strength between the copper foil 110 and the active material layer may be reduced. In addition, when the change in surface state of the copper foil 110 is increased, wrinkles or tears may occur.

Accordingly, in order to maintain the surface state of the copper foil 110 to prevent the occurrence of wrinkles or tears, it is necessary for the first roughness variation of the copper foil 110 to be 0.7 μm or less.

According to one embodiment of the present disclosure, the copper foil 110 has a second roughness variation of 0.8 μm or less.

The second roughness variation may be obtained through a calculation according to Equation 6 below.

Second roughness variation = |surface roughness (Rz) of shiny surface after 24 hr immersion-surface roughness (Rz) of shiny surface before immersion| [Equation 6]

The surface roughness (Rz) of the shiny surface after 24 hr immersion in Equation 6 refers to a ten-point average roughness (Rz) of the shiny surface (S surface) of the copper foil 110 after immersing the copper foil 110 in a 20% NaOH solution for 24 hours.

The surface roughness (Rz) of the shiny surface before the immersion in Equation 6 refers to a ten-point average roughness (Rz) of the shiny surface (S surface) of the copper foil 110 before the immersion.

When the second roughness variation of the copper foil 110 exceeds 0.8 μm, the change in surface state of the copper foil 110 may be increased after the immersion for 24 hours. As a result, the copper foil 110 may not have excellent coatability on an active material, and an adhesive strength between the copper foil 110 and the active material layer may be reduced. In addition, when the change in surface state of the copper foil 110 is increased, wrinkles or tears may occur.

Accordingly, in order to maintain the surface state of the copper foil 110 to prevent the occurrence of wrinkles or tears, it is necessary for the second roughness variation of the copper foil 110 to be 0.8 μm or less.

According to one embodiment of the present disclosure, the copper foil 110 may have an arithmetic mean roughness (Ra) of 0.1 μm to 0.3 μm.

As the secondary battery is repeatedly charged and discharged, an active material layer may alternately contract and expand, which leads to the separation of the active material layer from the copper foil 110, thus reducing the charge and discharge efficiency of the secondary battery. Accordingly, in order to secure a certain level or higher of capacity retention rate and lifespan of the secondary battery (that is, in order to suppress the deterioration of charge and discharge efficiency of the secondary battery), the bonding strength of the copper foil 110 and the active material layer should be high by allowing the copper foil 110 to have an excellent coatability on the active material.

Specifically, as the arithmetic mean roughness (Ra) of the copper foil 110 is smaller, the charge and discharge efficiency of the secondary battery including the copper foil 110 tends to be less deteriorated. Thus, according to one embodiment of the present disclosure, the copper foil 110 has the arithmetic mean roughness (Ra) of 0.1 μm to 0.3 μm.

When the arithmetic mean roughness (Ra) of the copper foil 110 is less than 0.1 μm, the surface area of the copper foil 110 is relatively small so that the active material is easily delaminated from the copper foil 110, and as a result, rapid lifespan deterioration of the secondary battery due to a repetition of charging and discharging is caused.

On the other hand, when the arithmetic mean roughness (Ra) of the copper foil 110 exceeds 0.3 μm, a plurality of spaces exist between the copper foil 110 and the active material layer since contact uniformity between the copper foil 110 and the active material layer does not reach a predetermined level (i.e., the coating itself is partially performed), and as a result, rapid lifespan deterioration of the secondary battery due to a repetition of charging and discharging is caused.

FIG. 3 is a photograph of a copper foil after a salt spray test according to still another embodiment of the present disclosure.

Hereinafter, an electrode 100 including the copper foil 110 of the present disclosure and a secondary battery

including the electrode 100 will be described in detail.

FIG. 4 is a cross-sectional view of an electrode for a secondary battery according to one embodiment of the present disclosure.

As illustrated in FIG. 4, the electrode 100 for a secondary battery according to one embodiment of the present disclosure includes the copper foil 110 of one of the above-described embodiments of the present disclosure and an active material layer 120.

FIG. 4 illustrates a configuration in which the active material layer 120 is formed on one surface of the copper foil 110. However, the present disclosure is not limited thereto, and referring to FIG. 5, the active material layer 120 may be formed on each of both surfaces of the copper foil 110.

Generally, in a lithium secondary battery, an aluminum foil is used as a cathode current collector coupled to a cathode active material, and the copper foil 110 is used as an anode current collector coupled to an anode active material.

According to one embodiment of the present disclosure, the electrode 100 for a secondary battery is an anode, the copper foil 110 is used as an anode current collector, and the active material layer 120 includes an anode active material.

In order to secure a high capacity of a secondary battery, the active material layer 120 of the present disclosure may be formed of a composite of carbon and metal. The metal may include, for example, at least one of silicon (Si), germanium (Ge), tin (Sn), lithium (Li), zinc (Zn), magnesium (Mg), cadmium (Cd), cerium (Ce), nickel (Ni), and iron (Fe), and preferably, may include Si and/or Sn.

FIG. 6 is a schematic cross-sectional view of a secondary battery according to one embodiment of the present disclosure.

Referring to FIG. 6, the secondary battery includes a cathode 370, an anode 340, an electrolyte 350 disposed between the cathode 370 and the anode 340 to provide an environment in which ions are movable, and a separator 360 electrically insulating the cathode 370 and the anode 340. Here, the ions moving between the cathode 370 and the anode 340 are, for example, lithium ions. The separator 360 separates the cathode 370 and the anode 340 in order to prevent charges generated in one electrode from being uselessly consumed by moving to another electrode through the inside of the secondary battery. Referring to FIG. 6, the separator 360 is disposed in the electrolyte 350.

The cathode 370 includes a cathode current collector 371 and a cathode active material layer 372, and an aluminum foil may be used as the cathode current collector 371.

The anode 340 includes an anode current collector 341 and an anode active material layer 342, and the copper foil 110 may be used as the anode current collector 341.

According to one embodiment of the present disclosure, the copper foil 110 disclosed in FIG. 1 or 2 may be used as the anode current collector 341. In addition, the electrode 100 for a secondary battery illustrated in FIG. 4 or 5 may be used as the anode 340 of the secondary battery illustrated in FIG. 6.

Hereinafter, a method for manufacturing the copper foil 110 of the present disclosure will be described in detail with reference to FIG. 7.

The method for manufacturing the copper foil 110 of the present disclosure includes forming a copper film 111, and forming a protective layer 112 on the copper film 111.

The method of the present disclosure includes forming the copper film 111 on a rotating anode drum 40 by electrically conducting a cathode plate 30 and the rotating anode drum 40, which are disposed to be spaced apart from each other in an electrolyte 20 in an electrolytic bath 10.

As illustrated in FIG. 7, the cathode plate 30 may include first and second cathode plates 31 and 32 electrically insulated from each other.

The forming of the copper film 111 may be performed by forming a seed layer through electrical conduction between the first cathode plate 31 and the rotating anode drum 40, and then growing a seed layer through electrical conduction between the second cathode plate 32 and the rotating anode drum 40.

A current density provided by each of the first and second cathode plates 31 and 32 may be 30 to 130 ASD (A/dm2).

When the current density provided by each of the first and second cathode plates 31 and 32 is less than 30 ASD, a surface roughness of the copper foil 110 is reduced, and thus an adhesion between the copper foil 110 and the active material layer 120 may not be sufficient.

On the other hand, when the current density provided by each of the first and second cathode plates 31 and 32 exceeds 130 ASD, a surface of the copper foil 110 may be rough, and thus the active material may not be smoothly coated.

The surface characteristics of the copper film 111 may be changed according to a buffing or polishing degree of a surface of the rotating anode drum 40. For example, the surface of the rotating anode drum 40 may be polished using a polishing brush having a grit of #800 to #3000.

In the process of forming the copper film 111, the electrolyte 20 is maintained at a temperature of 48 °C to 60 °C. More specifically, the temperature of the electrolyte 20 may be maintained at 50 °C or higher. At this time, the physical, chemical, and electrical characteristics of the copper film 111 may be controlled by adjusting a composition of the

electrolyte 20.

According to one embodiment of the present disclosure, the electrolyte 20 includes copper ions at a concentration of 70 g/L to 100 g/L, sulfuric acid at a concentration of 70 g/L to 150 g/L, chlorine (Cl) at a concentration of 15 ppm to 25 ppm, lead ions ($Pb^{2+}$) at a concentration of 1 ppm to 100 ppm, arsenic (As) at a concentration of 0.5 ppm to 5 ppm, silver ions ($Ag^{+}$) at a concentration of 0.1 ppm to 3 ppm, hydrogen peroxide ($H_2O_2$) at a concentration of 1 ml/L to 10 ml/L, and an organic additive.

In order to facilitate the formation of the copper film 111 through copper electrodeposition, the concentration of the copper ions and the concentration of the sulfuric acid in the electrolyte 20 are adjusted in a range of 70 g/L to 100 g/L and a range of 70 g/L to 150 g/L, respectively.

In one embodiment of the present disclosure, the chlorine (Cl) includes all of chlorine ions (Cl-) and chlorine atoms present in a molecule. The chlorine (Cl) may, for example, be used to remove silver (Ag) ions introduced into the electrolyte 20 in a process of forming the copper film 111. Specifically, the chlorine (Cl) may precipitate silver (Ag) ions in the form of silver chloride (AgCl). The silver chloride (AgCl) may be removed through filtration.

When the concentration of the chlorine (Cl) is less than 15 ppm, the silver (Ag) ions are not removed well. On the other hand, when the concentration of the chlorine (Cl) exceeds 25 ppm, unnecessary reaction may occur due to the excessive amount of the chlorine (Cl). Accordingly, the concentration of the chlorine (Cl) in the electrolyte 20 is controlled in a range of 15 ppm to 25 ppm.

According to one embodiment of the present disclosure, the electrolyte 20 including an organic additive may further include lead ions ($Pb^{2+}$). Specifically, the electrolyte 20 may include lead ions ($Pb^{2+}$) at a concentration of 1 ppm to 100 ppm. When the lead ions ($Pb^{2+}$) are maintained at the concentration of 1 ppm to 100 ppm, the tensile strength index according to the present disclosure may be maintained at 3.0 $kgf/mm^2$ or less, and the elongation index may be maintained at 2.1% or less. As a result, the occurrence of wrinkles or tears during the manufacturing process of the copper foil may be prevented, and the occurrence of wrinkles or tears even after a salt spray test may be prevented or controlled. On the other hand, when the concentration of the lead ions ($Pb^{2+}$) is less than 1 ppm, which may reduce effectiveness in terms of maintaining the physical properties of the present disclosure. As a result, the tensile strength after the salt spray test is rapidly lowered as compared to that before the salt spray test, causing the tensile strength index to exceed 3.0 $kgf/mm^2$, and the elongation after the salt spray test is rapidly lowered as compared to that before the salt spray test, causing the elongation index to exceed 2.1%.

Further, when the concentration of the lead ions ($Pb^{2+}$) exceeds 100 ppm, copper may be non-uniformly precipitated. As a result, the tensile strength after the salt spray test is rapidly lowered as compared to that before the salt spray test, causing the tensile strength index to exceed 3.0 $kgf/mm^2$, and the elongation after the salt spray test is rapidly lowered as compared to that before the salt spray test, causing the elongation index to exceed 2.1%.

According to one embodiment of the present disclosure, the electrolyte 20 including an organic additive may further include lead ions (Pb2+). Specifically, the electrolyte 20 may include lead ions (Pb2+) at a concentration of 1 ppm to 100 ppm. When the lead ions (Pb2+) are maintained at the concentration of 1 ppm to 100 ppm, the first weight retention rate according to the present disclosure may be maintained at 0.1% or less, and the second weight retention rate may be maintained at 0.3% or less. In addition, the first roughness variation may be maintained at 0.7 $\mu m$ or less, and the second roughness variation may be maintained at 0.8 $\mu m$ or less.

On the other hand, when the concentration of the lead ions (Pb2+) is less than 1 ppm, a problem may occur where effectiveness is reduced in terms of maintaining the physical properties of the present disclosure. Accordingly, there is a rapid change in the weight of the copper foil 110 after the immersion, causing the first weight retention rate to exceed 0.1% and the second weight retention rate to exceed 0.3%. In addition, the surface of the copper foil 110 may be non-uniform, causing the first roughness variation to exceed 0.7 $\mu m$ and the second roughness variation to exceed 0.8 $\mu m$.

In addition, when the concentration of the lead ions (Pb2+) exceeds 100 ppm, copper is non-uniformly precipitated, and thus, there is a rapid change in the weight of the copper foil 110 after the immersion, causing the first weight retention rate to exceed 0.1% and the second weight retention rate to exceed 0.3%. In addition, the surface of the copper foil 110 may be non-uniform, causing the first roughness variation to exceed 0.7 $\mu m$ and the second roughness variation to exceed 0.8 $\mu m$.

According to one embodiment of the present disclosure, the electrolyte 20 including an organic additive may further include arsenic (As). Specifically, the electrolyte 20 may include the arsenic (As) at a concentration of 0.5 ppm to 5 ppm. When the arsenic (As) is maintained at the concentration of 0.5 ppm to 5 ppm, the tensile strength index according to the present disclosure may be maintained at 3.0 $kgf/mm^2$ or less, and the elongation index may be maintained at 2.1% or less. In addition, the arsenic (As) serves as an accelerator for accelerating a reduction reaction of copper (Cu) in a certain concentration section. However, in the electrolyte 20, the arsenic (As) may be present, for example, in a trivalent or pentavalent ionic state ($As^{3+}$ or $As^{5+}$).

On the other hand, when the concentration of the arsenic (As) is less than 0.5 ppm, the reduction reaction of copper is reduced. As a result, the tensile strength after the salt spray test is rapidly lowered as compared to that before the salt spray test, causing the tensile strength index to exceed 3.0 $kgf/mm^2$, and the elongation after the salt spray test is

rapidly lowered as compared to that before the salt spray test, causing the elongation index to exceed 2.1%.

On the other hand, when the concentration of the arsenic (As) exceeds 5 ppm, the reduction reaction of copper occurs excessively. As a result, the tensile strength after the salt spray test is rapidly lowered as compared to that before the salt spray test, causing the tensile strength index to exceed 3.0 $kgf/mm^2$, and the elongation after the salt spray test is rapidly lowered as compared to that before the salt spray test, causing the elongation index to exceed 2.1%.

According to one embodiment of the present disclosure, the electrolyte 20 including an organic additive may further include arsenic (As). Specifically, the electrolyte 20 may include the arsenic (As) at a concentration of 0.5 ppm to 5 ppm. When the arsenic (As) is maintained at the concentration of 0.5 ppm to 5 ppm, the first weight retention rate according to the present disclosure may be maintained at 0.1% or less, and the second weight retention rate may be maintained at 0.3% or less. In addition, the arsenic (As) serves as an accelerator for accelerating a reduction reaction of copper (Cu) in a certain concentration section. However, in the electrolyte 20, the arsenic (As) may be present, for example, in a trivalent or pentavalent ionic state (As3+ or As5+).

On the other hand, when the concentration of the arsenic (As) is less than 0.5 ppm, the reduction reaction of copper is reduced, and thus, there is a rapid change in the weight of the copper foil 110 after the immersion, causing the first weight retention rate to exceed 0.1% and the second weight retention rate to exceed 0.3%. In addition, due to the reduction of the reduction reaction of copper, the surface of the copper foil 110 becomes irregular, causing the first roughness variation to exceed 0.7 μm and the second roughness variation to exceed 0.8 μm.

In addition, when the concentration of the arsenic (As) exceeds 5 ppm, the reduction reaction of copper occurs excessively, and thus, there is a rapid change in the weight of the copper foil 110 after the immersion, causing the first weight retention rate to exceed 0.1% and the second weight retention rate to exceed 0.3%. In addition, due to the excessive reduction reaction of copper, the surface of the copper foil 110 becomes irregular, causing the first roughness variation to exceed 0.7 μm and the second roughness variation to exceed 0.8 μm.

In addition, according to one embodiment of the present disclosure, the electrolyte 20 including an organic additive may further include silver (Ag). Specifically, the electrolyte 20 may include the silver (Ag) at a concentration of 0.1 ppm to 3 ppm. When the silver (Ag) is maintained at the concentration of 0.1 to 3 ppm, the tensile strength index according to the present disclosure may be maintained at 3.0 $kgf/mm^2$ or less, and the elongation index may be maintained at 2.1% or less.

On the other hand, when the concentration of the silver (Ag) is less than 0.1 ppm, the elongation after the salt spray test is rapidly lowered as compared to that before the salt spray test, causing the elongation index to exceed 2.1%.

In addition, when the concentration of the silver (Ag) exceeds 3 ppm, the tensile strength after the salt spray test is rapidly lowered as compared to that before the salt spray test, causing the tensile strength index to exceed 3.0 $kgf/mm^2$.

In addition, according to one embodiment of the present disclosure, the electrolyte 20 including an organic additive may further include silver (Ag). Specifically, the electrolyte 20 may include the silver (Ag) at a concentration of 0.1 ppm to 3 ppm. When the silver (Ag) is maintained at the concentration of 0.1 to 3 ppm, the first weight retention rate according to the present disclosure may be maintained at 0.1% or less, and the second weight retention rate may be maintained at 0.3% or less.

On the other hand, when the concentration of the silver (Ag) is less than 0.1 ppm, the first weight retention rate may exceed 0.1%, and the second weight retention rate may exceed 0.3%.

In addition, when the concentration of the silver (Ag) exceeds 3 ppm, copper is non-uniformly electrodeposited on the rotating anode drum. Accordingly, there is a rapid change in the weight of the copper foil 110 after the immersion, causing the first weight retention rate to exceed 0.1% and the second weight retention rate to exceed 0.3%. In addition, due to the non-uniform electrodeposition of copper, the surface of the copper foil 110 becomes irregular, causing the first roughness variation to exceed 0.7 μm and the second roughness variation to exceed 0.8 μm.

According to one embodiment of the present disclosure, the electrolyte 20 including an organic additive may further include hydrogen peroxide ($H_2O_2$). Due to the organic additive, organic impurities may be present in the electrolyte 20 that is continuously plated, and a content of carbon (C) in the copper foil may be appropriately adjusted by decomposing the organic impurities by treating the organic impurities with the hydrogen peroxide ($H_2O_2$). As a concentration of total organic carbon (TOC) in the electrolyte 20 is increased, an amount of carbon (C) elements introduced into the copper film 111 is increased, which causes an increase in total amount of elements detached from the copper film 111 during heat treatment and thus causes a decrease in strength of the copper foil 110.

According to one embodiment of the present disclosure, the electrolyte 20 including an organic additive may further include hydrogen peroxide ($H_2O_2$). Due to the organic additive, organic impurities may be present in the electrolyte 20 that is continuously plated, and a content of carbon (C) in the copper foil may be appropriately adjusted by decomposing the organic impurities by treating the organic impurities with hydrogen peroxide ($H_2O_2$). As a concentration of total organic carbon (TOC) in the electrolyte 20 is increased, an amount of carbon (C) elements input into the copper film 111 is increased, and thus a total amount of elements detached from the copper film 111 during heat treatment is increased, which causes a change in the surface state of the copper foil 110, resulting in changes in both the weight and the surface roughness of the copper foil 110 after immersion.

The hydrogen peroxide ($H_2O_2$) is added in an amount of 1 ml to 10 ml with respect to one L of the electrolyte. Specifically, the hydrogen peroxide ($H_2O_2$) may be added in an amount of 2 ml to 8 ml with respect to one L of the electrolyte. When the amount of the added hydrogen peroxide ($H_2O_2$) is less than 1 ml/L, it is meaningless because there is little effect on the decomposition of organic impurities. When the amount of the added hydrogen peroxide ($H_2O_2$) exceeds 10 ml/L, the organic impurities are excessively decomposed, and thus, the effects of organic additives such as a polishing agent, a moderator, and a roughness regulator, are also suppressed.

The organic additive included in the electrolyte 20 includes at least one of a polishing agent (component A), a moderator (component B), and a roughness regulator (component C). The organic additive in the electrolyte 20 has a concentration of 1 ppm to 100 ppm.

The organic additive may include two or more of the polishing agent (component A), the moderator (component B), and the roughness regulator (component C), and may include all of the three components. Even in this case, the concentration of the organic additive is 100 ppm or less. When the organic additive includes all of the polishing agent (component A), the moderator (component B), and the roughness regulator (component C), the organic additive may have a concentration of 10 ppm to 100 ppm.

The polishing agent (component A) includes sulfonic acid or a metal salt thereof. The polishing agent (component A) may have a concentration of 1 ppm to 15 ppm in the electrolyte 20.

The polishing agent (component A) may increase an amount of electric charges of the electrolyte 20 to improve an electrodeposition speed of copper, may improve the curling characteristics of the copper foil, and may increase the gloss of the copper foil 110. When the concentration of the polishing agent (component A) is less than 1 ppm, the gloss of the copper foil 110 is lowered, and when the concentration of the polishing agent (component A) exceeds 15 ppm, the roughness of the copper foil 110 may be increased and the strength of the copper foil 110 may be lowered. As a result, the tensile strength after the salt spray test may be rapidly lowered as compared to that before the salt spray test, causing the tensile strength index to exceed 3.0 kgf/$mm^2$.

The polishing agent (component A) may increase an amount of electric charges of the electrolyte 20 to improve an electrodeposition speed of copper, may improve the curling characteristics of the copper foil, and may increase the gloss of the copper foil 110. When the concentration of the polishing agent (component A) is less than 1 ppm, the gloss of the copper foil 110 is lowered, and when the concentration of the polishing agent (component A) exceeds 15 ppm, the weight and the surface roughness of the copper foil 110 after immersion may be changed. Accordingly, there is a rapid change in the weight of the copper foil 110 after the immersion, causing the first weight retention rate to exceed 0.1% and the second weight retention rate to exceed 0.3%. In addition, copper is non-uniformly electrodeposited, and thus, the surface of the copper foil 110 becomes irregular, causing the first roughness variation to exceed 0.7 $\mu$m and the second roughness variation to exceed 0.8 $\mu$m.

More specifically, the polishing agent (component A) may have a concentration of 5 ppm to 10 ppm in the electrolyte 20.

The polishing agent may include, for example, at least one selected from among a bis-(3-sulfopropyl)-disulfide disodium salt, a 3-mercapto-1-propanesulfonic acid, a 3-(N,N-dimethylthiocarbamoyl)-thiopropanesulfonate sodium salt, a 3-[(amino-iminomethyl)thio]-1-propanesulfonate sodium salt, an O-ethyldithiocarbonato-S-(3-sulfopropyl)-ester sodium salt, a 3-(benzothiazolyl-2-mercapto)-propyl-sulfonic acid sodium salt, and an ethylenedithiodipropylsulfonic acid sodium salt.

The moderator (component B) includes a non-ionic water-soluble polymer. The moderator (component B) may have a concentration of 1 ppm to 15 ppm in the electrolyte 20.

The moderator (component B) reduces the electrodeposition speed of copper to prevent an rapid increase in roughness and a decrease in strength of the copper foil 110. This moderator (component B) is referred to as an inhibitor or suppressor.

When the concentration of the moderator (component B) is less than 1 ppm, the roughness of the copper foil 110 is rapidly increased, and the strength of the copper foil 110 is lowered. As a result, the tensile strength after the salt spray test may be rapidly lowered as compared to that before the salt spray test, causing the tensile strength index to exceed 3.0 kgf/$mm^2$. On the other hand, although the concentration of the moderator (component B) exceeds 15 ppm, there is almost no change in physical properties such as the appearance, gloss, roughness, strength, and elongation of the copper foil 110. Accordingly, without increasing manufacturing costs and wasting raw materials due to an unnecessary increase in concentration of the moderator (component B), the concentration of the moderator (component B) may be adjusted in a range of 1 ppm to 15 ppm.

When the concentration of the moderator (component B) is less than 1 ppm, the weight and the surface roughness of the copper foil 110 after immersion may be changed. Accordingly, there is a rapid change in the weight of the copper foil 110 after the immersion, causing the first weight retention rate to exceed 0.1% and the second weight retention rate to exceed 0.3%. In addition, copper is non-uniformly electrodeposited, and thus, the surface of the copper foil 110 becomes irregular, causing the first roughness variation to exceed 0.7 $\mu$m and the second roughness variation to exceed 0.8 $\mu$m.

The moderator (component B) may include, for example, at least one non-ionic water-soluble polymer selected from among a polyethylene glycol (PEG), polypropylene glycol, a polyethylene polypropylene copolymer, polyglycerin, polyethylene glycol dimethyl ether, hydroxyethylene cellulose, polyvinyl alcohol, stearic acid polyglycol ether, and stearyl alcohol polyglycol ether. However, the type of the moderator is not limited thereto, and other non-ionic water-soluble polymers usable to manufacture the high strength copper foil 110 may be used as the moderator.

The roughness regulator (component C) includes a nitrogen-containing heterocyclic quaternary ammonium salt or a derivative thereof.

The roughness regulator (component C) improves glossiness and evenness of the copper foil 110. The roughness regulator (component C) may have a concentration of 1 to 15 ppm in the electrolyte 20.

When the concentration of the roughness regulator (component C) is less than 1 ppm, the effects of improving glossiness and evenness of the copper foil 110 may not be exhibited, and at the same time, the elongation after the salt spray test is rapidly lowered as compared to that before the salt spray test, causing elongation index to exceed 2.1%. On the other hand, when the concentration of the roughness regulator (component C) exceeds 15 ppm, the surface gloss of the copper foil 110 becomes non-uniform, the surface roughness of the copper foil 110 is rapidly increased, and it is difficult to secure a desired roughness range, and thus, the strength of the copper foil 110 may be reduced. As a result, the tensile strength after the salt spray test is rapidly lowered as compared to that before the salt spray test, causing the tensile strength index to exceed 3.0 $kgf/mm^2$. More specifically, the roughness regulator (component C) may have a concentration of 5 ppm to 10 ppm in the electrolyte 20.

When the concentration of the roughness regulator (component C) is less than 1 ppm, the effect of improving the glossiness and evenness of the copper foil 110 may not be exhibited. Accordingly, the first roughness variation exceeds 0.7 $\mu$m, and the second roughness variation exceeds 0.8 $\mu$m.

On the other hand, when the concentration of the roughness regulator (component C) exceeds 15 ppm, the weight and the surface roughness of the copper foil 110 after immersion may be changed. Accordingly, there is a rapid change in the weight of the copper foil 110 after the immersion, causing the first weight retention rate to exceed 0.1% and the second weight retention rate to exceed 0.3%. In addition, copper is non-uniformly electrodeposited, and thus, the surface of the copper foil 110 becomes irregular, causing the first roughness variation to exceed 0.7 $\mu$m and the second roughness variation to exceed 0.8 $\mu$m. More specifically, the roughness regulator (component C) may have a concentration of 5 ppm to 10 ppm in the electrolyte 20.

The roughness regulator (component C) may include at least one of compounds represented by Chemical Formulae 1 to 5 below.

[Chemical Formula 1]

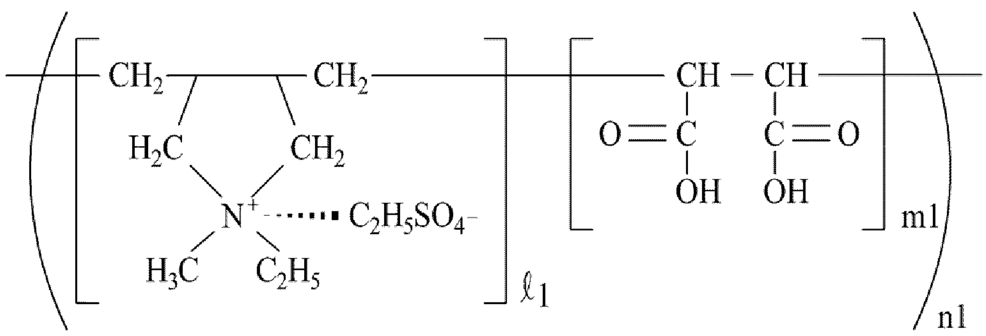

[Chemical Formula 2]

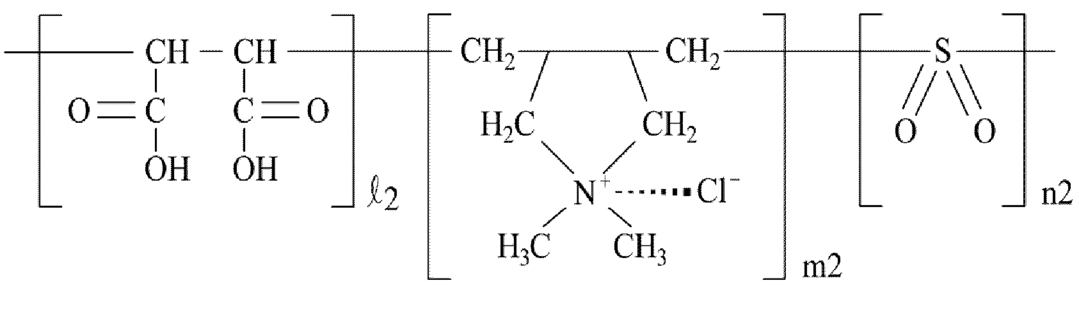

[Chemical Formula 3]

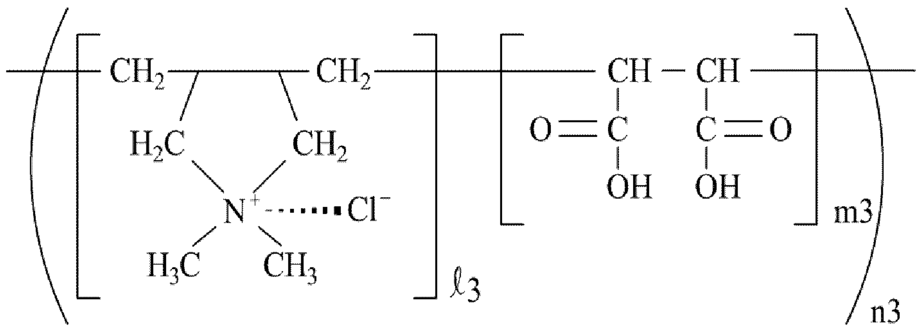

[Chemical Formula 4]

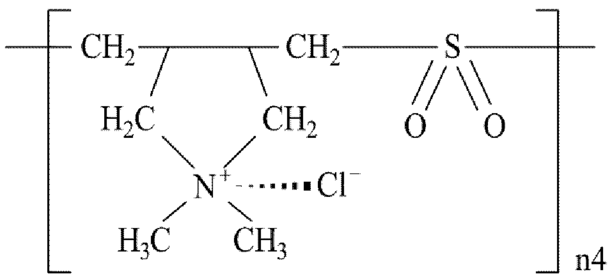

[Chemical Formula 5]

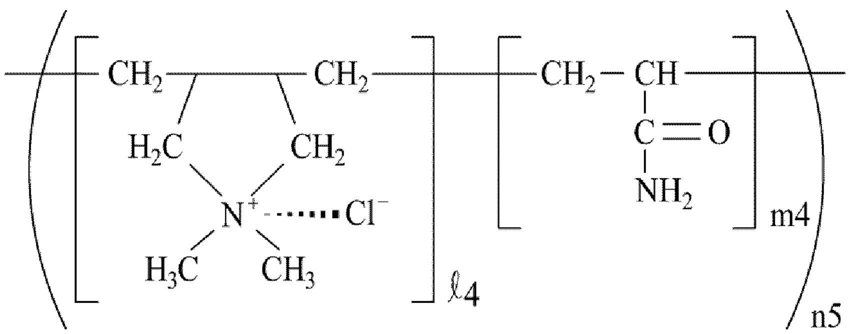

In Chemical Formulae 1 to 5, 11 to 14, m1 to m4, and n1 to n5 may each refer to a repeating unit, may each be an integer greater than or equal to 1, and may be identical to or different from each other.

According to one embodiment of the present disclosure, each of the compounds represented by Chemical Formulae 1 to 5 has a number average molecular weight of 500 to 12,000.

When the number average molecular weight of the compounds represented by Chemical Formulae 1 to 5 and used as the roughness regulator is less than 500, the surface roughness of the copper foil 110 is increased due to a high ratio of monomers. When the content of the roughness regulator is low, the surface roughness of the copper film 111 may be increased, and thus the glossiness and evenness of the copper film 111 may be deteriorated.

When the number average molecular weight of the compounds represented by Chemical Formulae 1 to 5 exceeds 12,000, a surface roughness deviation of the copper foil 110 is increased. In this case, although a concentration of other additives is adjusted, it is difficult to suppress an increase in the surface roughness deviation of the copper foil 110.

The compounds represented by Chemical Formulae 1 to 5 may be prepared through polymerization or copolymerization using, for example, diallyl dimethyl ammonium chloride (DDAC).

As the compound represented by Chemical Formula 1, for example, there is PAS-2451 (with Mw 30,000 manufactured by Nittobo Co., Ltd.) or the like.

As the compound represented by Chemical Formula 2, for example, there is PAS-84 (with M2 20,000 manufactured by Nittobo Co., Ltd.) or the like.

As the compound represented by Chemical Formula 3, for example, there is PAS-2351 (with Mw 25,000

manufactured by Nittobo Co., Ltd.) or the like.

As the compound represented by Chemical Formula 4, for example, there is PAS-A-1 (with Mw 5,000 manufactured by Nittobo Co., Ltd.), PAS-A-5 (with Mw 4,000 manufactured by Nittobo Co., Ltd.), or the like.

As the compound represented by Chemical Formula 5, for example, there is PAS-J-81 (with Mw 180,000 manufactured by Nittobo Co., Ltd.) or the like.

When the copper film 111 is formed, a flow rate of the electrolyte 20 supplied into the electrolytic bath 10 may be 41 $m^3$/hour to 45 $m^3$/hour.

The forming of the copper film 111 may include at least one of filtering the electrolyte 20 using activated carbon, filtering the electrolyte 20 using diatomaceous earth, and treating the electrolyte 20 with ozone ($O_3$).

Specifically, in order to filter the electrolyte 20, the electrolyte 20 may be circulated at a flow rate of 35 $m^3$/hour to 45 $m^3$/hour. That is, in order to remove solid impurities present in the electrolyte 20 while electroplating to form the copper film 111, filtering may be performed at the flow rate of 35 $m^3$/hour to 45 $m^3$/hour. In this case, activated carbon or diatomaceous earth may be used.

In order to maintain cleanliness of the electrolyte 20, the electrolyte 20 may be treated with ozone ($O_3$).

In addition, in order to maintain the cleanliness of the electrolyte 20, a copper (Cu) wire used as a raw material for the electrolyte 20 may be cleaned.

According to one embodiment of the present disclosure, preparing the electrolyte 20 may include heat-treating a Cu wire, acid-cleaning the heat-treated Cu wire, water-cleaning the acid-cleaned Cu wire, and inputting the water-cleaned Cu wire into sulfuric acid for an electrolyte.

More specifically, in order to maintain the cleanliness of the electrolyte 20, a Cu wire with a high purity (99.9% or more) is heat-treated in an electric furnace at a temperature of 750 °C to 850 °C to burn various organic impurities attached to the Cu wire, the heat-treated Cu wire is acid-cleaned using a 10% sulfuric acid solution for 10 to 20 minutes, and the acid-cleaned Cu wire is then water-cleaned using distilled water, thereby preparing copper for manufacturing the electrolyte 20. The water-cleaned Cu wire may be input into sulfuric acid for an electrolyte to prepare the electrolyte 20.

According to one embodiment of the present disclosure, in order to satisfy the characteristics of the copper foil 110, a concentration of TOC in the electrolyte 20 is controlled to be 300 ppm or less. That is, the electrolyte 20 may have a TOC concentration of 300 ppm or less.

The copper film 111 thus prepared may be cleaned in a cleaning bath.

For example, an acid cleaning process for removing impurities on a surface of the copper film 111, for example, resin components or natural oxides, and a water cleaning process for removing acidic solutions used for the acid cleaning may be sequentially performed. The cleaning process may be omitted.

Next, the protective layer 112 is formed on the copper film 111.

Referring to FIG. 7, the method may further include immersing the copper film 111 in an anticorrosion solution 60. When the copper film 111 is immersed in the anticorrosion solution 60, the copper film 111 may be guided by a guide roll 70 disposed in the anticorrosion solution 60.

As described above, the anticorrosion solution 60 may include at least one of a chromium compound, a silane compound, and a nitrogen compound. For example, the copper film 111 may be immersed in a potassium dichromate solution of 1g/L to 10 g/L at room temperature for 1 to 30 seconds.

Meanwhile, the protective layer 112 may include a silane compound by silane treatment or a nitrogen compound by nitrogen treatment.

The copper foil 110 is formed by forming the protective layer 112.

At least one active material selected from the group consisting of a carbon, a metal (Me) of Si, Ge, Sn, Li, Zn, Mg, Cd, Ce, Ni or Fe, an alloy including the metal (Me), an oxide (MeOx) of the metal (Me), and a complex of the metal (Me) and carbon is coated on one surface or both surfaces the copper foil 110 of the present disclosure prepared through the method as described above to prepare an electrode (i.e., anode) for a secondary battery of the present disclosure.

For example, 100 parts by weight of carbon for an anode active material, 1 to 3 parts by weight of styrene butadiene rubber (SBR), and 1 to 3 parts by weight of carboxymethyl cellulose (CMC) are mixed and produced into a slurry using distilled water as a solvent. Subsequently, the slurry is applied on the copper foil 110 using a doctor blade to a thickness of 20 $\mu$m to 60 $\mu$m and pressed at 110 °C to 130 °C and at a pressure of 0.5 to 1.5 ton/$cm^2$.

A secondary battery may be manufactured using the electrode (anode) for a secondary battery of the present disclosure prepared through the method as described above, together with the conventional cathode, electrolyte and separator.

Hereinafter, the present disclosure will be described in detail with reference to examples and comparative examples. However, the examples described below are only for the understanding of the present disclosure, and the scope of the present disclosure is not limited to these manufacturing examples.

Examples 1 to 6 and Comparative Examples 1 to 9

A copper foil was prepared using a foil maker including an electrolytic bath 10, a rotating anode drum 40 disposed in the electrolytic bath 10, and a cathode plate 30 disposed to be spaced apart from the rotating anode drum 40. An electrolyte 20 was a copper sulfate solution. A concentration of copper ions in the electrolyte 20 was set to 87 g/L, a concentration of sulfuric acid was set to 110 g/L, a temperature of the electrolyte was set to 55 °C, and a current density was set to 60 ASD.

In addition, a concentration of chlorine (Cl) contained in the electrolyte 20 was maintained at 20 ppm, and concentrations of lead ions, arsenic, silver ions, hydrogen peroxide, and an organic additive were as shown in Table 1 below.

In the organic additive, a bis-(3-sulfopropyl)-disulfide disodium salt (SPS) was used as a polishing agent (component A), PEG was used as a moderator (component B), and a diallylmethylethyl-ammoniumethylsulfate/maleic acid copolymer (PAS-2451™ with Mw 30,000 manufactured by Nittobo Co., Ltd.) was used as a roughness regulator (component C).

A current at a current density of 60 ASD was applied between the rotating anode drum 40 and the cathode plate 30 to prepare a copper film 111. Thereafter, the copper film 111 was immersed in an anticorrosion solution for about two seconds to treat a surface of the copper film 111 with chromium to form a protective layer 112, thereby preparing a copper foil 110. An anticorrosion solution containing chromic acid as a main component was used as the anticorrosion solution, and a concentration of the chromic acid was 5 g/L.

As a result, copper foils of Examples 1 to 6 and Comparative Examples 1 to 9 were prepared.

[Table 1]

| | SPS (Component A) (ppm) | PEG (Component B) (ppm) | PAS-2451 (Component C) (ppm) | Lead ions ($Pb^{2+}$) (ppm) | Arsenic (As) (ppm) | Silver (Ag) (ppm) | Hydrogen peroxide (ml/L) |
|---|---|---|---|---|---|---|---|
| Example 1 | 5 | 2 | 5 | 30 | 1.5 | 0.5 | 2 |
| Example 2 | 10 | 4 | 7 | 30 | 1.6 | 0.7 | 5 |
| Example 3 | 15 | 6 | 10 | 30 | 2.5 | 1.3 | 7 |
| Example 4 | 10 | 8 | 12 | 50 | 3.5 | 2.3 | 7 |
| Example 5 | 10 | 10 | 15 | 50 | 4.0 | 2.5 | 5 |
| Example 6 | 10 | 13 | 10 | 70 | 4.1 | 2.8 | 5 |
| Comparative Example 1 | 55 | 5 | 10 | 0.1 | 3.5 | 2.1 | 9 |
| Comparative Example 2 | 10 | 50 | 15 | 50 | 7.0 | 1.5 | 7 |
| Comparative Example 3 | 15 | 7 | 55 | 50 | 3.7 | 0.01 | 5 |
| Comparative Example 4 | 0 | 10 | 10 | 150 | 7.5 | 5.5 | 5 |
| Comparative Example 5 | 10 | 0 | 10 | 70 | 0.1 | 0.01 | 7 |
| Comparative Example 6 | 10 | 10 | 0 | 150 | 0.2 | 7.0 | 5 |
| Comparative Example 7 | 0.8 | 12 | 12 | 50 | 0.1 | 1.3 | 5 |
| Comparative Example 8 | 12 | 0.8 | 12 | 50 | 8.0 | 1.5 | 5 |
| Comparative Example 9 | 12 | 12 | 0.8 | 50 | 7.0 | 1.5 | 5 |

[Table 2]

| | Tensile strength 1 (kgf/mm 2) | Tensile strength 2 (kgf/mm 2) | Tensile strength index (kgf/mm 2) | Elongatio n 1 (%) | Elongatio n 2 (%) | Elongatio n index (%) | Occurrenc e of wrinkle/te ar |
|---|---|---|---|---|---|---|---|
| Example 1 | 32.0 | 29.1 | 2.9 | 11.5 | 10.8 | 0.7 | no |
| Example 2 | 48.7 | 46.3 | 2.4 | 4.6 | 3.6 | 1.0 | no |
| Example 3 | 53.3 | 51.7 | 1.6 | 4.2 | 3.1 | 1.1 | no |
| Example 4 | 45.7 | 43.4 | 2.3 | 8.2 | 6.1 | 2.1 | no |
| Example 5 | 51.3 | 48.7 | 2.6 | 5.4 | 4.2 | 1.2 | no |
| Example 6 | 38.7 | 36.4 | 2.3 | 9.2 | 7.9 | 1.3 | no |
| Comparativ e Example 1 | 38.4 | 35.2 | 3.2 | 6.8 | 3.8 | 3.0 | Occurance |
| Comparativ e Example 2 | 31.7 | 28.4 | 3.3 | 5.8 | 3.2 | 2.6 | Occurance |
| Comparativ e Example 3 | 47.2 | 43.3 | 3.9 | 4.9 | 2.7 | 2.2 | Occurance |
| Comparativ e Example 4 | 51.0 | 47.6 | 3.4 | 5.2 | 3.2 | 2.0 | Occurance |
| Comparativ e Example 5 | 55.4 | 52.1 | 3.3 | 4.1 | 1.8 | 2.3 | Occurance |
| Comparativ e Example 6 | 49.0 | 45.4 | 3.6 | 4.8 | 2.1 | 2.7 | Occurance |
| Comparativ e Example 7 | 48.5 | 44.8 | 3.7 | 6.1 | 3.2 | 2.9 | Occurance |
| Comparativ e Example 8 | 50.2 | 47.1 | 3.1 | 4.8 | 2.1 | 2.7 | Occurance |
| Comparativ e Example 9 | 51.8 | 47.9 | 3.9 | 5.2 | 2.4 | 2.8 | Occurance |

For the copper foils of Examples 1 to 6 and Comparative Examples 1 to 9 prepared as described above, i) tensile strength 1, ii) tensile strength 2, iii) tensile strength index, iv) elongation 1, v) elongation 2, vi) elongation index, and vii) the occurrence of wrinkle/tear were checked.

Measurement of i) tensile strength 1 and ii) tensile strength 2

Tensile strength 1 of the copper foil 110 is a tensile strength of a sample before a salt spray test.

Tensile strength 2 of the copper foil 110 is a tensile strength of the sample after the salt spray test.

In this case, the salt spray test was performed for a total of 72 hours by spraying a 5±1% NaCl on each copper foil for 6 cycles, wherein 1 cycle means spraying the solution at a temperature of 35±2 °C for 2 hours and followed by drying the sprayed solution for 10 hours.

For tensile strength 1, a tensile strength of the copper foil 110 was measured at room temperature using a universal testing machine (UTM) according to regulations of the IPC-TM-650 test method manual.

For tensile strength 2, the copper foil 110 was subjected to the salt spray test and a tensile strength of the copper foil 110 was measured using the same method as for tensile strength 1.

iii) Calculation of tensile strength index

The tensile strength index was obtained through a calculation according to Equation 1 below using values of the measured i) tensile strength 1 and ii) tensile strength 2.

[Equation 1]

$$\text{Tensile strength index} = |\text{tensile strength 2} - \text{tensile strength 1}|$$

Measurement of iv) elongation 1 and v) elongation 2

Elongation 1 of the copper foil 110 is an elongation of a sample before a salt spray test.

Elongation 2 of the copper foil 110 is an elongation of the sample after the salt spray test.

In this case, the salt spray test was performed for a total of 72 hours by spraying a 5±1% NaCl solution on each copper foil for 6 cycles, wherein 1 cycle means spraying the solution at a temperature of 35±2 °C for 2 hours and followed by drying the sprayed solution for 10 hours.

For elongation 1, an elongation of the copper foil 110 was measured at room temperature using a UTM according to regulations of the IPC-TM-650 test method manual.

For elongation 2, the copper foil 110 was subjected to the salt spray test and an elongation of the copper foil 110 was measured using the same method as for elongation 1.

vi) Calculation of elongation index

The elongation index was obtained through a calculation according to Equation 2 below using values of the measured i) elongation 1 and ii) elongation 2.

[Equation 2]

$$\text{Elongation index} = |\text{elongation 2} - \text{elongation 1}|$$

vii) Occurrence of wrinkle/tear

After 100 charge and discharge cycles, the secondary battery was disassembled to observe whether a wrinkle or a tear occurred on the copper foil. When the copper foil was wrinkled or torn, the copper foil was labeled as "occurrence," and when the copper foil was not wrinkled or torn, the copper foil was labeled as "no."

Referring to Tables 1 and 2, the following results may be confirmed.

A tear/wrinkle occurred in the copper foil of Comparative Example 1 prepared using an electrolyte including the polishing agent (component A) in an excessive amount, and the lead ions in a small amount.

A tear/wrinkle occurred in the copper foil of Comparative Example 2 prepared using an electrolyte including the moderator (component B) in an excessive amount, and the arsenic in an excessive amount.

A tear/wrinkle occurred in the copper foil of Comparative Example 3 prepared using an electrolyte including the roughness regulator (component C) in an excessive amount, and the silver (Ag) in a small amount.

A tear/wrinkle occurred in the copper foil of Comparative Example 4 prepared using an electrolyte including the lead ions, the arsenic, and the silver (Ag) in an excessive amount and without including the polishing agent (component A).

A tear/wrinkle occurred in the copper foil of Comparative Example 5 prepared using an electrolyte including the arsenic and the silver (Ag) in a small amount and without including the moderator (component B).

A tear/wrinkle occurred in the copper foil of Comparative Example 6 prepared using an electrolyte including the lead ions and the silver (Ag) in an excessive amount and the arsenic in a small amount, and without including the roughness regulator (component C).

A tear/wrinkle occurred in the copper foil of Comparative Example 7 prepared using an electrolyte including the polishing agent (component A) and the arsenic (As) in a small amount.

A tear/wrinkle occurred in the copper foil of Comparative Example 8 prepared using an electrolyte including the moderator (component B) in a small amount, and the arsenic (As) in an excessive amount.

A tear/wrinkle occurred in the copper foil of Comparative Example 9 prepared using an electrolyte including the roughness regulator (component C) in a small amount, and the arsenic (As) in an excessive amount.

Examples 7 to 10 and Comparative Examples 10 to 13

A copper foil was prepared using a foil maker including an electrolytic bath 10, a rotating anode drum 40 disposed in the electrolytic bath 10, and a cathode plate 30 disposed to be spaced apart from the rotating anode drum 40. An electrolyte 20 was a copper sulfate solution. A concentration of copper ions in the electrolyte 20 was set to 87 g/L, a

concentration of sulfuric acid was set to 110 g/L, a temperature of the electrolyte was set to 55 °C, and a current density was set to 60 ASD.

In addition, a concentration of chlorine (Cl) contained in the electrolyte 20 was maintained at 20 ppm, and concentrations of lead ions, arsenic, silver ions, hydrogen peroxide, and an organic additive were as shown in Table 3 below.

In the organic additive, a bis-(3-sulfopropyl)-disulfide disodium salt (SPS) was used as a polishing agent (component A), PEG was used as a moderator (component B), and a diallylmethylethyl-ammoniumethylsulfate/maleic acid copolymer (PAS-2451™ with Mw 30,000 manufactured by Nittobo Co., Ltd.) was used as a roughness regulator (component C).

A current at a current density of 60 ASD was applied between the rotating anode drum 40 and the cathode plate 30 to prepare a copper film 111. Thereafter, the copper film 111 was immersed in an anticorrosion solution for about two seconds to treat a surface of the copper film 111 with chromium to form a protective layer 112, thereby preparing a copper foil 110. An anticorrosion solution containing chromic acid as a main component was used as the anticorrosion solution, and a concentration of the chromic acid was 5 g/L.

As a result, copper foils of Examples 7 to 10 and Comparative Examples 10 to 13 were prepared.

[Table 3]

| | SPS (Component A) (ppm) | PEG (Component B) (ppm) | PAS-2451 (Component C) (ppm) | Lead ions (ppm) | Arsenic (ppm) | Silver ions (ppm) | Hydrogen peroxide |
|---|---|---|---|---|---|---|---|
| Example 7 | 5 | 2 | 5 | 30 | 1.5 | 0.5 | 2 |
| Example 8 | 10 | 4 | 7 | 30 | 1.6 | 0.7 | 5 |
| Example 9 | 15 | 6 | 10 | 50 | 2.5 | 1.3 | 7 |
| Example 10 | 10 | 8 | 12 | 70 | 3.5 | 2.3 | 7 |
| Comparative Example 10 | 55 | 5 | 10 | 0.1 | 7.0 | 0.7 | 9 |
| Comparative Example 11 | 10 | 0 | 15 | 50 | 0.1 | 5.5 | 7 |
| Comparative Example 12 | 15 | 7 | 55 | 150 | 1.5 | 0.7 | 5 |
| Comparative Example 13 | 10 | 10 | 10 | 150 | 2.5 | 0.8 | 55 |

[Table 4]

| | Weight (g) before immersion | Weight (g) after 5 hr immersion | Weight (g) after 24 hr immersion | First weight retention rate (%) | Second weight retention rate (%) | Occurrence of wrinkle/tear |
|---|---|---|---|---|---|---|
| Example 7 | 0.1797 | 0.1797 | 0.1796 | 0.000% | 0.056% | no |
| Example 8 | 0.1795 | 0.1795 | 0.1794 | 0.000% | 0.056% | no |
| Example 9 | 0.1796 | 0.1795 | 0.1794 | 0.056% | 0.111% | no |
| Example 10 | 0.1798 | 0.1798 | 0.1797 | 0.000% | 0.056% | no |
| Comparative Example 10 | 0.1795 | 0.1793 | 0.1790 | 0.111% | 0.279% | Occurance |
| Comparative Example 11 | 0.1799 | 0.1797 | 0.1794 | 0.111% | 0.278% | Occurance |
| Comparative Example 12 | 0.1801 | 0.1798 | 0.1793 | 0.167% | 0.444% | Occurance |
| Comparative Example 13 | 0.1794 | 0.1791 | 0.1787 | 0.167% | 0.390% | Occurance |

[Table 5]

| | Surface roughnes s (Rz) of matte surface before immersio n (μm) | Surface roughnes s (Rz) of matte surface after 24 hr immersio n (μm) | First roughnes s variation (μm) | Surface roughnes s (Rz) of shiny surface before immersio n (μm) | Surface roughnes s (Rz) of shiny surface after 24 hr immersio n (μm) | Second roughnes s variation (μm) | Occurrence of wrinkle/te ar |
|---|---|---|---|---|---|---|---|
| Example 7 | 0.89 | 1.45 | 0.56 | 1.02 | 1.34 | 0.32 | no |
| Example 8 | 1.28 | 1.78 | 0.50 | 1.18 | 1.33 | 0.15 | no |
| Example 9 | 1.32 | 1.77 | 0.45 | 0.99 | 1.45 | 0.46 | no |
| Example 10 | 1.38 | 1.79 | 0.41 | 1.11 | 1.43 | 0.32 | no |
| Comparativ e Example 10 | 1.21 | 2.41 | 1.20 | 1.20 | 2.31 | 1.11 | Occurance |
| Comparativ e Example 11 | 1.33 | 2.12 | 0.79 | 1.21 | 2.10 | 0.89 | Occurance |
| Comparativ e Example 12 | 1.56 | 2.51 | 0.95 | 1.45 | 2.49 | 1.04 | Occurance |
| Comparativ e Example 13 | 1.29 | 2.11 | 0.82 | 1.25 | 2.08 | 0.83 | Occurance |

For the copper foils of Examples 7 to 10 and Comparative Examples 10 to 13 prepared as described above, i) weight before immersion, ii) weight after 5 hr immersion, iii) weight after 24 hr immersion, iv) first weight retention rate, v) second weight retention rate, vi) surface roughness (Rz) of matte surface before immersion, vii) surface roughness (Rz) of shiny surface before immersion, viii) surface roughness (Rz) of matte surface after 24 hr immersion, ix) surface roughness (Rz) of shiny surface after 24 hr immersion, x) first roughness variation, and xi) second roughness variation were measured and calculated, and xii) occurrence of wrinkle/tear was checked.

A sample of the copper foil 110 was cut into 5 mm*5 mm, dried in an oven at 50 °C for 24 hours, and then subjected to a pre-treatment process for cooling the sample in a desiccator.

i) Measurement of weight before immersion

The weight of the copper foil 110 before immersion refers to a weight of the sample measured before immersing the sample in a 20% NaOH solution.

ii) Measurement of weight after 5 hr immersion

The weight of the copper foil 110 after 5 hr immersion refers to a weight of the sample measured after immersing the sample in a 20% NaOH solution for 5 hours.

The immersion is performed in a 20% NaOH solution for 5 hours, and the weight of the sample is measured after drying at room temperature for 2 hours after the immersion.

iii) Measurement of weight after 24 hr immersion

The weight of the copper foil 110 after 24 hr immersion refers to a weight of the sample measured after immersing the sample in a 20% NaOH solution for 24 hours.

The immersion is performed in a 20% NaOH solution for 24 hours, and the weight of the sample is measured after drying at room temperature for 2 hours after the immersion.

Calculation of iv) first weight retention rate and v) second weight retention rate

The first weight retention rate may be obtained through a calculation according to Equation 3 below using values of the measured i) weight before immersion and ii) weight after 5 hr immersion.

First weight retention rate = |(weight after 5 hr immersion-weight before immersion)/weight before immersion * 100| [Equation 3]

The second weight retention rate may be obtained through a calculation according to Equation 4 below using values of the measured i) weight before immersion and iii) weight after 24 hr immersion.

Second weight retention rate = |(weight after 24 hr immersion-weight before immersion)/weight before immersion * 100| [Equation 4]

Measurement of vi) surface roughness (Rz) of matte surface before immersion and vii) surface roughness (Rz) of shiny surface before immersion

The surface roughness (Rz) of a matte surface before immersion and a surface roughness (Rz) of a shiny surface before immersion refer to ten-point average roughnesses (Rz) of the matte surface (M surface) and the shiny surface (S surface) of the copper foil 110, respectively, before immersion.

The surface roughness (Rz) of the matte surface before immersion and the surface roughness (Rz) of the shiny surface before immersion may each be measured from the sample of 5 mm*5 mm by using a surface roughness measurement device (M300, MahrSurf) in accordance with specifications of JIS B 0601-1994.

Measurement of viii) surface roughness (Rz) of matte surface and ix) surface roughness (Rz) of shiny surface, after 24 hr immersion

The surface roughness (Rz) of the matte surface after 24 hr immersion refers to a ten-point average roughness (Rz) of the matte surface (M surface) of the copper foil 110 after immersing the copper foil 110 in a 20% NaOH solution for 24 hours, and the surface roughness (Rz) of the shiny surface after 24 hr immersion refers to a ten-point average roughness (Rz) of the shiny surface (S surface) of the copper foil 110 after immersing the copper foil 110 in a 20% NaOH solution for 24 hours.

The immersion used for measuring the surface roughness (Rz) is the same as an immersion process used for the measurement of iii) weight after 24 hr immersion. The sample is dried at room temperature for 2 hours after the immersion, and then the surface roughness is measured in the same manner as vi) surface roughness (Rz) of matte surface before immersion and vii) surface roughness (Rz) of shiny surface before immersion.

Calculation of x) first roughness variation and xi) second roughness variation

The first roughness variation may be obtained through a calculation according to Equation 5 below using values of the measured vi) surface roughness (Rz) of matte surface before immersion and Viii) surface roughness (Rz) of matte surface after 24 hr immersion.

First roughness variation=|surface roughness (Rz) of matte surface after 24 hr immersion-surface roughness (Rz) of matte surface before immersion| [Equation 5]

The second roughness variation may be obtained through a calculation according to Equation 6 below using values of the measured vii) surface roughness (Rz) of shiny surface before immersion and ix) surface roughness (Rz) of shiny surface after 24 hr immersion.

Second roughness variation=|surface roughness (Rz) of shiny surface after 24 hr immersion-surface roughness (Rz) of shiny surface before immersion| [Equation 6]

xii) Occurrence of wrinkle/tear

After 100 charge and discharge cycles, the secondary battery was disassembled to observe whether a wrinkle or a tear occurred on the copper foil. When the copper foil was wrinkled or torn, the copper foil was labeled as "occurrence," and when the copper foil was not wrinkled or torn, the copper foil was labeled as "no."

Referring to Tables 4, 5, and 6, the following results may be confirmed.

A tear/wrinkle occurred in the copper foil of Comparative Example 10 prepared using an electrolyte including the polishing agent (component A) and the arsenic in an excessive amount, and the lead ions in a small amount.

A tear/wrinkle occurred in the copper foil of Comparative Example 11 prepared using an electrolyte including a moderator (component B) and arsenic in small amounts, and silver ions in an excessive amount.

A tear/wrinkle occurred in the copper foil of Comparative Example 12 prepared using an electrolyte including a roughness regulator (component C) and lead ions in excessive amounts.

A tear/wrinkle occurred in the copper foil of Comparative Example 13 prepared using an electrolyte including lead ions and hydrogen peroxide in excessive amounts.

On the other hand, all the copper foils of Examples 7 to 10 according to the present disclosure satisfied values within the above standard ranges, and as a result, no tears/wrinkles occurred in the copper foil.

It will be apparent to those skilled in the art that the present disclosure described above is not limited by the above-described embodiments and the accompanying drawings and that various substitutions, modifications, and variations can be made in the present disclosure without departing from the spirit and scope of the present disclosure. Accordingly, the scope of the present disclosure is defined by the accompanying claims, and it is intended that all variations and modifications derived from the meaning, scope, and equivalent concept of the claims fall within the scope of the present disclosure.

## Claims

**1.** A copper foil comprising:

a copper film including 99.9 wt% or more of copper; and
a protective layer formed on the copper film,
wherein the copper foil has a tensile strength index of 3.0 kgf/mm$^2$ or less, and an elongation index of 2.1% or less,
wherein the tensile strength index is calculated by Equation 1 below,

[Equation 1]

$$\text{tensile strength index} = |\text{tensile strength 2 - tensile strength 1}|$$

wherein, tensile strength 1 in Equation 1 is a tensile strength of a sample before a salt spray test, and
tensile strength 2 in Equation 1 is a tensile strength of the sample after the salt spray test, the elongation index is calculated by Equation 2 below,

[Equation 2]

$$\text{elongation index} = |\text{elongation 2 - elongation 1}|$$

wherein elongation 1 in Equation 2 is an elongation of the sample before the salt spray test, and
elongation 2 in Equation 2 is an elongation of the sample after the salt spray test, and
the salt spray test is performed for a total of 72 hours by spraying a 5$\pm$1% NaCl solution on the copper foil for 6 cycles, wherein 1 cycle means that the NaCl solution is sprayed at a temperature of 35$\pm$2 °C for 2 hours and then is dried for 10 hours.

**2.** The copper foil of claim 1, wherein tensile strength 2 is 28 kgf/mm$^2$ or more.

**3.** The copper foil of claim 1, wherein elongation 2 is in a range of 3.0% to 12%.

**4.** The copper foil of claim 1, further comprising a protective layer formed on the copper film.

**5.** The copper foil of claim 4, wherein the protective layer includes at least one of a chromium compound, a silane compound, and a nitrogen compound.

**6.** A method for manufacturing a copper foil, the method comprising:

preparing an electrolyte containing copper ions;
forming a copper film; and
forming a protective layer on the copper film,

wherein the forming of the copper film includes
forming the copper film on a rotating anode drum by electrically conducting a cathode plate and the rotating anode drum, which are disposed to be spaced apart from each other in the electrolyte in an electrolytic bath, and the electrolyte includes:

copper ions at a concentration of 70 g/L to 100 g/L;
sulfuric acid at a concentration of 70 g/L to 150 g/L;
chlorine (Cl) at a concentration of 15 ppm to 25 ppm;
lead ions ($Pb^{2+}$) at a concentration of 1 ppm to 100 ppm;
arsenic (As) at a concentration of 0.5 ppm to 5 ppm;
silver ions ($Ag^+$) at a concentration of 0.1 ppm to 3 ppm;
hydrogen peroxide at a concentration of 1 ml/L to 10 mlIL; and
an organic additive,
wherein the organic additive includes at least one of a polishing agent (component A), a moderator (component B), and a roughness regulator (component C),
wherein the polishing agent (component A) includes sulfonic acid or a metal salt thereof,
the moderator (component B) includes a non-ionic water-soluble polymer, and
the roughness regulator (component C) includes a nitrogen-containing heterocyclic quaternary ammonium salt or a derivative thereof.

**7.** The method of claim 6, wherein the polishing agent (component A) has a content of 1 ppm to 25 ppm.

**8.** The method of claim 6, wherein the moderator (component B) has a content of 1 ppm to 15 ppm.

**9.** The method of claim 6, wherein the roughness regulator has a content of 1 ppm to 15 ppm.

**10.** A copper foil comprising a copper film including 99.9 wt% or more of copper,
wherein the copper foil has a first weight retention rate of 0.1% or less, and a second weight retention rate of 0.3% or less,

wherein the first weight retention rate is calculated by Equation 3 below,

first weight retention rate = |(weight after 5 hr immersion-weight before immersion)/weight before immersion * 100|, and [Equation 3]

the second weight retention rate is calculated by Equation 4 below,

second weight retention rate = |(weight after 24 hr immersion-weight before immersion)/ weight before immersion * 100|. [Equation 4]

**11.** The copper foil of claim 10, wherein the copper film includes a matte surface and a shiny surface, and has a first roughness variation of 0.7 $\mu$m or less,
wherein the first roughness variation is calculated by Equation 5 below,

first roughness variation = |surface roughness (Rz) of matte surface after 24 hr immersion-surface roughness (Rz) of matte surface before immersion|. [Equation 5]

**12.** The copper foil of claim 10, wherein the copper film includes a matte surface and a shiny surface, and has a second roughness variation of 0.8 $\mu$m or less,
wherein the second roughness variation is calculated by Equation 6 below,

second roughness variation = |surface roughness (Rz) of shiny surface after 24 hr immersion-surface roughness (Rz) of shiny surface before immersion|. [Equation 6]

**13.** The copper foil of claim 10, further comprising a protective layer formed on the copper film.

**14.** The copper foil of claim 13, wherein the protective layer includes at least one of a chromium compound, a silane compound, and a nitrogen compound.

FIG. 1

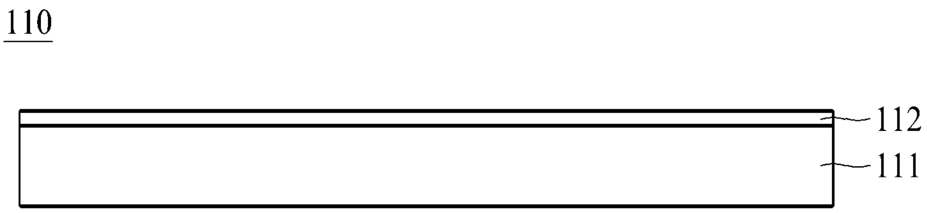


FIG. 2

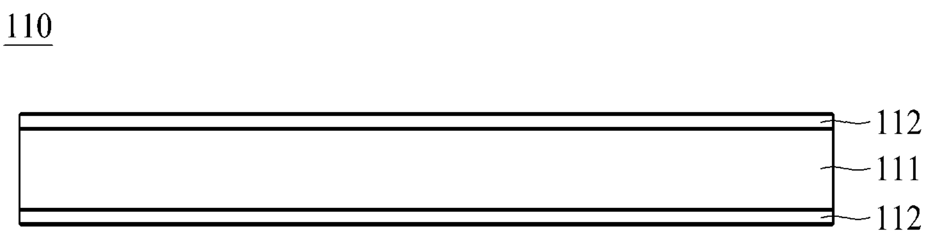

FIG. 3

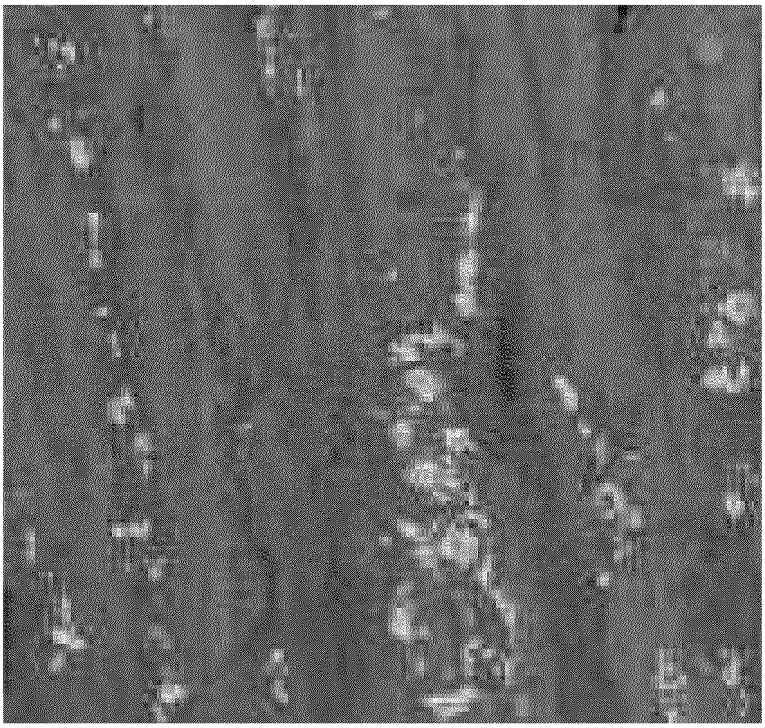

FIG. 4

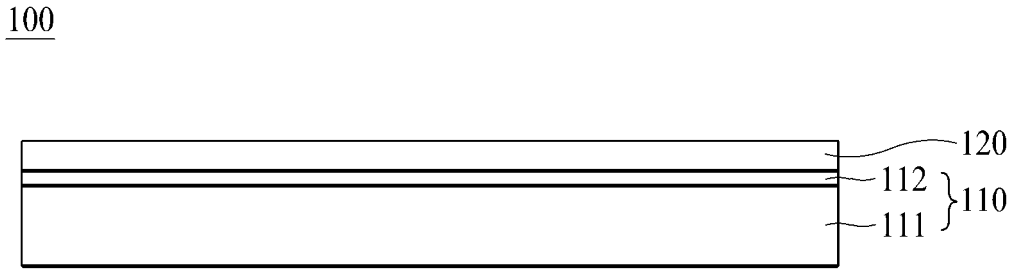


FIG. 5

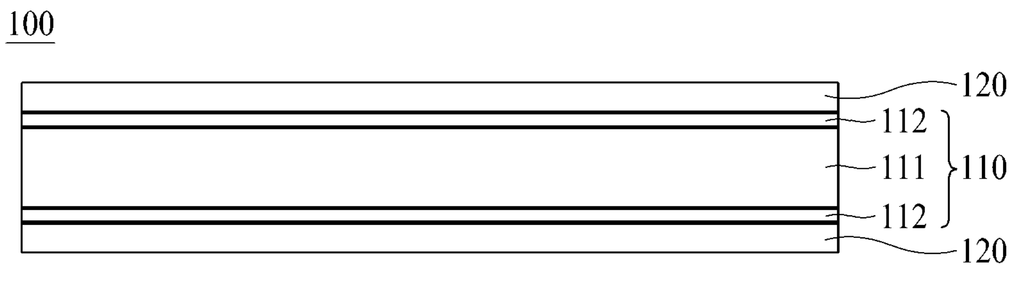

FIG. 6

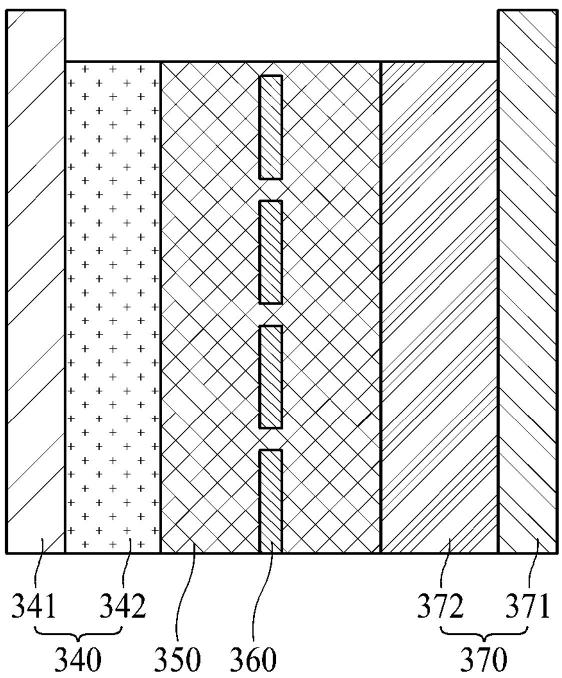

FIG. 7

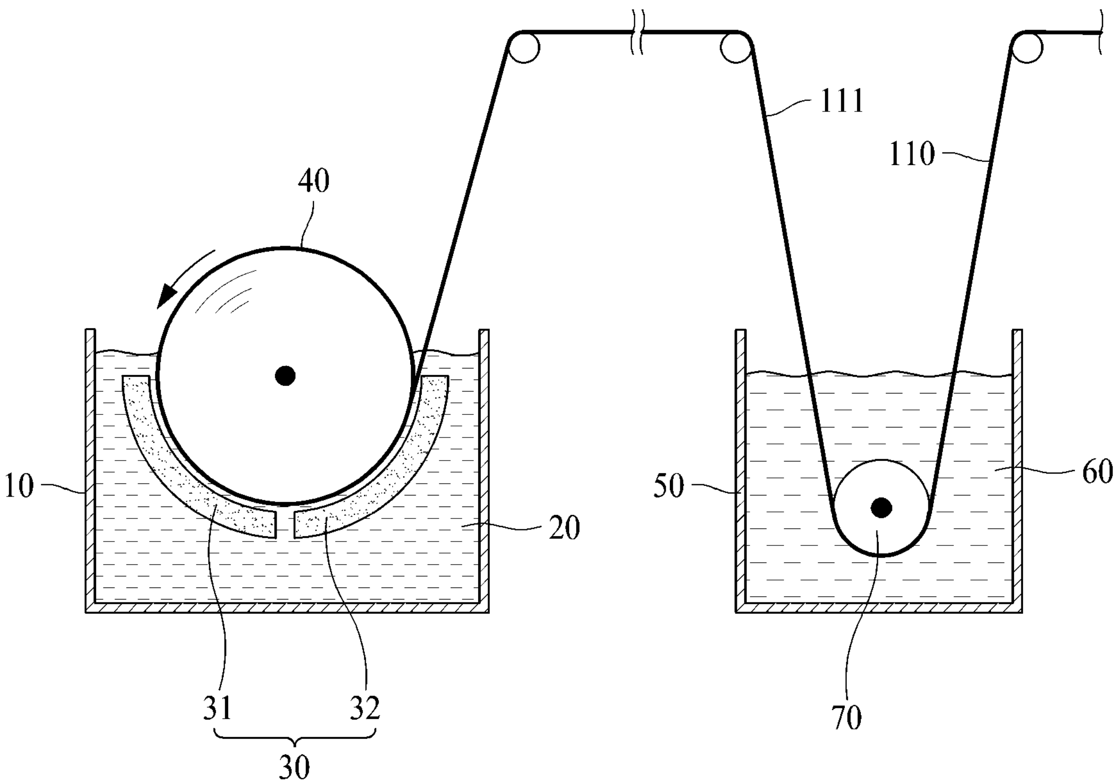

## INTERNATIONAL SEARCH REPORT

International application No.
**PCT/KR2023/018610**

### A. CLASSIFICATION OF SUBJECT MATTER

**C25D 1/04**(2006.01)i; **C25D 3/38**(2006.01)i; **C25D 17/12**(2006.01)i; **C23C 28/00**(2006.01)i; **C23F 11/18**(2006.01)i; **H01M 4/66**(2006.01)i; **H01M 4/13**(2010.01)i

According to International Patent Classification (IPC) or to both national classification and IPC

### B. FIELDS SEARCHED

Minimum documentation searched (classification system followed by classification symbols)

C25D 1/04(2006.01); C23C 22/24(2006.01); C25D 17/10(2006.01); C25D 3/38(2006.01); H01M 10/0525(2010.01); H01M 4/04(2006.01); H01M 4/13(2010.01); H01M 4/134(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 동박(copper foil), 구리막(copper layer), 보호층(protective layer), 인장강도(tensile), 연신율(elongation), 염수분무시험(slat spray test), 전해액(electrolyte)

### C. DOCUMENTS CONSIDERED TO BE RELEVANT

| Category* | Citation of document, with indication, where appropriate, of the relevant passages | Relevant to claim No. |
|---|---|---|
| A | KR 10-2021-0062204 A (SK NEXILIS CO., LTD.) 31 May 2021 (2021-05-31)<br>See paragraphs [0082]-[0090], [0102]-[0104], [0207]-[0209], [0211] and [0213], claims 1 and 11 and figure 1. | 1-14 |
| A | KR 10-2021-0067247 A (SK NEXILIS CO., LTD.) 08 June 2021 (2021-06-08)<br>See paragraphs [0057], [0062], [0091], [0136] and [0156], claims 9, 13 and 15 and figure 1. | 1-14 |
| A | KR 10-2018-0009226 A (LS MTRON LTD.) 26 January 2018 (2018-01-26)<br>See paragraph [0060], claims 1-2 and 7-8 and figure 1. | 1-14 |
| A | CN 111864177 B (NAN YA PLASTICS CORP.) 31 August 2021 (2021-08-31)<br>See abstract and claims 1-4. | 1-14 |
| A | US 2021-0317590 A1 (TEX TECHNOLOGY INC.) 14 October 2021 (2021-10-14)<br>See abstract and claims 1-8. | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 February 2024** | **28 February 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2023/018610**

| Patent document cited in search report | Publication date (day/month/year) | Patent family member(s) | Publication date (day/month/year) |
|---|---|---|---|
| KR 10-2021-0062204 A | 31 May 2021 | CN 113924669 A | 11 January 2022 |
| | | EP 3951021 A1 | 09 February 2022 |
| | | EP 3951021 A4 | 09 November 2022 |
| | | JP 2022-529462 A | 22 June 2022 |
| | | JP 7326668 B2 | 16 August 2023 |
| | | TW 202121717 A | 01 June 2021 |
| | | TW I794684 B | 01 March 2023 |
| | | US 2022-0228268 A1 | 21 July 2022 |
| | | WO 2021-101177 A1 | 27 May 2021 |
| KR 10-2021-0067247 A | 08 June 2021 | None | |
| KR 10-2018-0009226 A | 26 January 2018 | None | |
| CN 111864177 B | 31 August 2021 | CN 111864177 A | 30 October 2020 |
| | | JP 2020-183575 A | 12 November 2020 |
| | | JP 7165120 B2 | 02 November 2022 |
| | | KR 10-2020-0127120 A | 10 November 2020 |
| | | KR 10-2331002 B1 | 24 November 2021 |
| | | TW 202041720 A | 16 November 2020 |
| | | TW I731330 B | 21 June 2021 |
| | | US 11588175 B2 | 21 February 2023 |
| | | US 2020-0350620 A1 | 05 November 2020 |
| | | US 2023-0155169 A1 | 18 May 2023 |
| | | US 2023-0187691 A1 | 15 June 2023 |
| US 2021-0317590 A1 | 14 October 2021 | CN 112543822 A | 23 March 2021 |
| | | CN 112543822 B | 16 September 2022 |
| | | EP 3798336 A1 | 31 March 2021 |
| | | EP 3798336 B1 | 04 October 2023 |
| | | JP 2021-017630 A | 15 February 2021 |
| | | JP 6667840 B1 | 18 March 2020 |
| | | KR 10-2021-0013059 A | 03 February 2021 |
| | | MY 185105 A | 30 April 2021 |
| | | RU 2762281 C1 | 17 December 2021 |
| | | TW 202108824 A | 01 March 2021 |
| | | TW I731731 B | 21 June 2021 |
| | | US 11773501 B2 | 03 October 2023 |
| | | WO 2021-014778 A1 | 28 January 2021 |

Form PCT/ISA/210 (patent family annex) (July 2022)